(19) Europäisches Patentamt
European Patent Office
Office européen des brevets

(11) EP 4 574 848 B1

(12) **EUROPEAN PATENT SPECIFICATION**

(45) Date of publication and mention of the grant of the patent:
**29.04.2026 Bulletin 2026/18**

(21) Application number: **23218239.4**

(22) Date of filing: **19.12.2023**

(51) International Patent Classification (IPC):
***C08F 8/00*** *(2006.01)* ***C08L 23/26*** *(2025.01)*
***C08L 23/0807*** *(2025.01)* ***C08L 23/14*** *(2006.01)*

(52) Cooperative Patent Classification (CPC):
(C-Sets available)
**C08L 23/0815; C08L 23/14;** C08L 2203/18 (Cont.)

# (54) POLYPROPYLENE COPOLYMER COMPOSITION HAVING HIGH MOLECULAR WEIGHT

POLYPROPYLENCOPOLYMERZUSAMMENSETZUNG MIT HOHEM MOLEKULARGEWICHT

COMPOSITION DE COPOLYMÈRE DE POLYPROPYLÈNE AYANT UN POIDS MOLÉCULAIRE ÉLEVÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.06.2025 Bulletin 2025/26**

(73) Proprietor: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06850 Kulloo (FI)**
- **KLIMKE, Katja Ellen**
  **4021 Linz (AT)**

(74) Representative: **Kador & Partner Part mbB**
**Corneliusstraße 15**
**80469 München (DE)**

(56) References cited:
**EP-A1- 3 018 153** **US-B2- 11 618 794**
**US-B2- 11 834 529**

- **LAGENDIJK R P ET AL: "Peroxydicarbonate modification of polypropylene and extensional flow properties", POLYMER, ELSEVIER, AMSTERDAM, NL, vol. 42, no. 25, 1 December 2001 (2001-12-01), pages 10035 - 10043, XP004318135, ISSN: 0032-3861, DOI: 10.1016/S0032-3861(01)00553-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/00, C08F 210/06;**
**C08K 5/14, C08L 23/0815;**
**C08K 5/14, C08L 23/14;**
**C08L 23/14, C08L 23/0815, C08K 5/14**

## Description

The present invention relates to a polypropylene composition having a comparatively low $MFR_2$ and a very low xylene hot insoluble content (XHU), wherein the final polypropylene composition is obtainable or is obtained by reacting a propylene copolymer (A) having a comparatively high melt flow rate $MFR_2$ (2.16 kg, 230 °C, ISO 1133) and a specific radical initiator (B).

## Background

Polypropylene random copolymers are widely used in pipe production due to their desirable cost/performance ratio. Typically the melt flow rate $MFR_2$ of propylene copolymers for pipe applications are below 1 g/10 min, e.g. typically between 0.2 - 0.9 g/10min. The only way to produce low MFR pipe grades is to adjust the molecular weight (melt flow rate) directly in the reactor. This leads to two main problems: Firstly, the yield of the polymerization catalyst is drastically reduced due to low amounts of hydrogen to achieve low MFR, and secondly, production of significant scrap volumes during grade transition between different high and low MFR grades. "Scrap volume" or "scrap content" herein means products which properties and parameter do not fulfil final "prime" specifications and are therefore low value products. Low throughput of the plant together with high amounts of scrap volumes increase the $CO_2$ emissions.

State of the art polypropylenes are mainly produced by continuous processes and the polymerization plants have increased sizes due to cost reasons. The bigger plants have higher throughputs and as a consequence increased amounts of commercially low value non-prime products are produced during grade transitions. Therefore, production of high molecular weight (low MFR) polypropylenes are desired, when starting from low molecular weight (high MFR) products to reduce the amount of non-prime volumes and improve the yield of the catalyst and plant efficiency.

Polypropylene having high melt strength are typically achieved by treatment with peroxide, treatment with monomer/peroxide mixtures and solid phase treatment by subjecting polypropylene homo- or copolymer to a peroxide treatment in the presence of dienes. Nevertheless, all these treatments result in various disadvantages. For example, the peroxide treatment in the presence of dienes leads to the formation of gels. Even worse, gel formation is usually increased when the extrusion screw speed reaches desirable industrial ranges.

Gel formation reflected by xylene hot insoluble (XHU) usually results in undesirable low melt strength such as reflected by the F30 (cN) values, limited mechanical performance and poor appearance articles made from these polypropylenes. This problem is of high practical relevance since complete absence of gel formation cannot be achieved in industrial scale characterized by relatively high extrusion screw speeds.

Therefore, polypropylenes achievable by peroxide treatment and still having high melt strength are highly desirable.

EP 2 520 425 A1 discloses a polypropylene for foam and foam containing the polypropylene as well as a process for producing the polypropylene and the foam. The polypropylene composition has a XHU content of less than 1.25 wt.-%; a F30 melt strength of at least 30 cN, determined in the Rheotens test at 200°C; and a melt extensibility v30 of at least 200 m/s, determined in the Rheotens test at 200°C. The polypropylene composition is obtained by mixing an intermediate polypropylene with peroxide and at least one diene and melt mixing the pre-mixed material to obtain the polypropylene composition.

WO 2021/001176 A1 discloses a propylene polymer composition comprising a long chain branched propylene polymer, wherein said propylene polymer composition has a) a crystallization temperature Tc of less than 115°C, b) a melting temperature Tm of less than 155°C, c) a F30 melt strength of from 5.0 to less than 30.0 cN, and d) a V30 melting extensibility of more than 190 mm/ s. The propylene polymer composition is obtained by reactive modification of a propylene polymer by extrusion in the presence of a peroxide. The propylene polymer composition may have a comparatively high melt flow rate $MFR_2$ (230°C, 2.16 kg) of 1.0 to 30.0 g/10 min.

US11834529 discloses a polypropylene composition having a MFR2 between 4.0 and 7.8 and XHU between 0.14 and 0.34 obtained by proving a PP having a MFR2 of 5.5 and containing 3.2 wt% of C6 comonomer, melting the PP with an amount of diacetyl peroxydicarbonate between 0.6 and 1.5 wt% and reacting them at a temperature of 200°C in an extruder Thus, it is an object of the present invention to provide an improved polypropylene composition and articles made therefrom which have a low melt flow rate, high melt strength, low gel content and which can be produced with reduced amounts of scrap content in the plant and low $CO_2$ emission. Moreover, it is an object of the present invention to improve yield of the polymerization catalyst and the total production rate (throughput) in such a process.

Summary of the Invention

The present invention is based on the finding that the above objects can surprisingly be achieved by a polypropylene composition having a $MFR_2$ (2.16 kg, 230 °C, ISO 1133) within the range of from 0.1 to 0.9 g/10min, and a xylene hot insoluble content (XHU) determined as described herein, within the range of from 0.01 to 0.65 wt.-%,

based on the total weight of the polypropylene composition, said polypropylene composition being obtainable or obtained according to a process comprising the steps of

a) providing a propylene copolymer (A) having a $MFR_2$ (2.16 kg, 230 °C, ISO 1133) within the range of from 1 to 3 g/10min and comprising a content of one or more $C_2$ or $C_4$ to $C_{12}$ alpha-olefin comonomer(s) in the range of from 1 to 10 wt.-%, based on the total weight of the propylene copolymer (A), preferably further melting the propylene copolymer (A) in an extruder;

b) mixing said propylene copolymer (A) in an amount within the range of from 67.0 to 99.5 wt.-% with a radical initiator (B) in an amount within the range of from 0.1 to 2.0 wt.-%, each based on the total weight of a resulting mixture, the radical initiator (B) being selected from the group consisting of the peroxy compounds according to the following formulae (I) to (III):

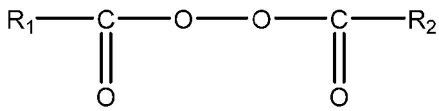

(I),

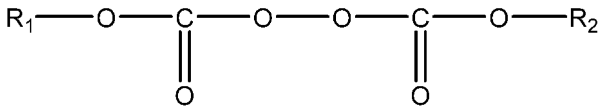

(II),

and

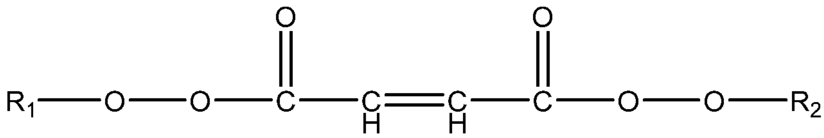

(III),

and any mixtures thereof, wherein $R_1$ and $R_2$ are each independently selected from alkyl groups having from 2 to 30 carbon atoms, and which may be cyclic, linear, branched or unbranched, wherein $R_1$ and $R_2$ may be the same or different, preferably melt mixing said propylene copolymer (A) with the radical initiator (B) in a melt mixing device, such as an extruder, and

c) reacting said propylene copolymer (A) and the radical initiator (B) at a temperature within the range of from 150 to 300 °C, thereby obtaining the polypropylene composition.

The present invention is further based on the finding that the above objects can surprisingly be achieved by a process for producing the above polypropylene composition, comprising the above steps a) to c).

The present invention is further directed to an article comprising the above polypropylene composition, which preferably is a pipe or a supplementary pipe article.

Moreover, the present invention is directed to the use of the above polypropylene composition for making an article, preferably a pipe or a supplementary pipe article by compounding, preferably extruding said polypropylene composition.

**Definitions**

The term "polypropylene composition" used herein denotes compositions comprising the reacted propylene copolymer (A) and optionally an ethylene polymer (C), and/or further additives (D).

The term "polypropylene base resin" as used herein denoted the entirety of polypropylene polymers in the composition.

The term "propylene copolymer" denotes a polypropylene which comprises propylene monomer units and comonomer units, comprising a content of one or more $C_2$ or $C_4$ to $C_{12}$ alpha-olefin comonomer(s) in the range of from 1 to 10 wt.-%, preferably in the range of from 1.5 to 8 wt.-%, more preferably in the range of from 2.0 to 6.5 wt.-%. The alpha-olefin comonomer(s) are preferably selected from the group consisting of 1-butene, 1-hexene and 1-octene. Particularly preferred is 1-hexene.

A propylene random copolymer is a copolymer of propylene monomer units and comonomer units, selected from $C_2$ or $C_4$-$C_{12}$ alpha-olefins, in which the comonomer units are distributed randomly over the polymeric chain. The propylene random copolymer can comprise comonomer units from one or more comonomers different in their amounts of carbon atoms. A propylene random copolymer does not include an elastomeric phase.

The term "additive" denotes any non-polymeric component contained in the polypropylene composition except for the radical initiator (B). They are described more concretely below.

"Catalyst" denotes an organometallic compound containing the reaction center of the polymerization.

"Catalyst system" denotes the mixture of the catalyst, the optional co-catalyst and the optional support.

"An asymmetric catalyst derived polypropylene" denotes a polypropylene having been produced in the presence of an asymmetric catalyst.

## Detailed description of the invention

The present invention provides improved polypropylene compositions for pipe applications and methods for making the polypropylene compositions and the pipes, where low melt flow rates can be combined with very low gel contents (low XHU contents). This invention enables improved catalyst efficiencies and yield as well as lower $CO_2$ emission. Overall cost reduction is a further advantage.

## Propylene Copolymer (A)

The polypropylene composition according to the present invention is obtainable or obtained by providing in step a) of the above process a propylene copolymer (A) having a $MFR_2$ (2.16 kg, 230 °C, ISO 1133) of 1 to 3 g/10min and comprising a content of one or more $C_2$ or $C_4$ to $C_{12}$ alpha-olefin comonomer(s), preferably one or more $C_4$ to $C_{12}$ alpha-olefin comonomer(s) of from 1 to 10 wt.-%, based on the total weight of the propylene copolymer (A). The propylene copolymer (A) is sometimes termed herein also "polypropylene base resin".

Preferably, the propylene copolymer (A) has a $MFR_2$ (2.16 kg, 230 °C, ISO 1133) of 1.0 to 2.5 g/10min.

Preferably, the propylene copolymer (A) has a content of one or more $C_2$ or $C_4$ to $C_{12}$ alpha-olefin comonomer(s) of from 1.5 to 8 wt.-%, more preferably from 2.0 to 6.5 wt.-%.

The alpha-olefin comonomer(s) are more preferably selected from the group consisting of ethylene, 1-butene, 1-hexene and 1-octene, even more preferably from the group consisting of 1-butene, 1-hexene and 1-octene. Particularly preferred is 1-hexene. Two or more comonomers can be combined to result in the total of comonomers of the propylene copolymer (A).

The propylene copolymer (A) preferably is a random propylene copolymer.

The propylene copolymer (A) may preferably have a xylene soluble content (XCS) in the range of from 1.0 to 20.0 wt.-%, more preferably in the range of from 2.0 to 14.0 wt.-%, even more preferably in the range of from 8.0 to 13.0 wt.-% based on the total weight of the propylene copolymer (A), wherein XCS is determined as described in the experimental section below.

The propylene copolymer (A) is preferably produced by a multi-stage polymerization process to obtain a multimodal propylene copolymer. The polymerization process is described in more detail below.

The propylene copolymer (A) is mixed in step b) of the above process in an amount of from 67.0 to 99.5 wt.-%, preferably from 75 to 99.5 wt.-%, more preferably from 80 to 99.5 wt.-%, based on the total weight of the polypropylene composition.

## Radical initiator (B)

The polypropylene composition according to the present invention is obtained in the presence of a radical initiator (B), defined by the above formulae (I) to (III).

More preferably, the radical initiator (B) is selected from the group consisting of di-(2-ethylhexyl) peroxydicarbonate, di-(4-tert-butylcyclohexyl) peroxycarbonate, dicetyl peroxydicarbonate and dimyristyl peroxydicarbonate, or any mixtures thereof. Even more preferably the radical initiator (B) is a dialkyl peroxydicarbonate of Formula (II).

A particularly preferred initiator is dicetyl peroxydicarbonate, e.g. available as Perkadox® 24L, commercially available by Nouryon Functional Chemical B.V., Herkenbosch, The Netherlands.

Preferably, these radical initiators have a half-life of 0.1 hour in the range of 75 to 90 °C, preferably 80 to 85 °C.

Preferably, the radical initiator (B) is added to the above step b) in an amount of from 0.5-1.5 wt.-% more preferably from 0.5-1.2 wt.-%, based on the total weight of a resulting mixture.

**Ethylene polymer (C)**

The polypropylene composition of the present invention may further comprise an ethylene polymer (C) prepared in the presence of a single site catalyst, preferably a metallocene catalyst.

Said ethylene polymer may preferably have a density (ISO 1183-1:2012) of 900 to 960 kg/$m^3$, more preferably 910 to 950 kg/$m^3$, even more preferably 912 to 940 kg/$m^3$, still more preferably 915 to 925 kg/$m^3$ and a $MFR_2$ (2.16 kg, 190 °C, ISO 1133) of 0.01 to 5.0 g/10 min, more preferably 0.1 to 2.75 g/10min, even more preferably 0.5 to 2.5 g/10 min, still more preferably 1.0 to 2.0 g/10 min.

Alternatively or additionally, the ethylene polymer may be a bimodal ethylene polymer or a block copolymer.

The above ethylene polymer may be a copolymer and may further comprise one or more, preferably two comonomers, thus forming a copolymer or terpolymer.

Such an ethylene copolymer (C) may comprise one or more comonomers selected from alpha-olefins having 4 to 12 carbon atoms, preferably 4 to 8 carbon atoms. More preferably, the ethylene copolymer (C) is a terpolymer of ethylene and two comonomers differing in their amount of carbon atoms.

It is preferred that the ethylene copolymer (C) is a copolymer of ethylene with comonomer units derived from 1-butene and/or 1-hexene. More preferably, the ethylene copolymer (C) is a terpolymer of ethylene with comonomer units derived from 1-butene and 1-hexene.

The term 'a copolymer of ethylene with comonomer units derived from 1-butene' indicates that the ethylene copolymer (C) contains only units derivable from ethylene and 1-butene.

The term 'a copolymer of ethylene with comonomer units derived from 1-hexene' indicates that the ethylene copolymer (C) contains only units derivable from ethylene and 1-hexene.

The term 'a terpolymer of ethylene with comonomer units derived from 1-butene and 1-hexene' indicates that the ethylene copolymer (C) contains only units derivable from ethylene, 1-butene and 1-hexene.

The ethylene copolymer (C) has a total comonomer content, i.e. the content of comonomer units derived from 1-butene and/or 1-hexene, of from 1.0 to 25.0 wt.-%, preferably from 1.5 to 22.5 wt.-%, still more preferably from 2.0 to 20.0 wt.-%.

The ethylene copolymer (C) preferably has a 1-butene content of from 0.1 to 5.0 wt.-%, more preferably from 0.2 to 3.5 wt.-%, still more preferably from 0.3 to 2.0 wt.-%, based on the total weight of the ethylene copolymer (C).

The ethylene copolymer (C) preferably has a 1-hexene content of from 4.0 to 20.0 wt.-%, more preferably from 5.0 to 18.0 wt.-%, still more preferably from 6.0 to 15.0 wt.-%, based on the total weight of the ethylene copolymer (C).

The ethylene copolymer (C) can be unimodal in regard to the comonomer distribution. This means that the comonomer units derived from 1-butene and/or 1-hexene are uniformly distributed in the copolymer of ethylene (B).

The ethylene copolymer (C) can be multimodal in regard to the comonomer distribution.

This means that the ethylene copolymer (C) comprises components with different weight average molecular weights (Mw).

When being a copolymer of ethylene and the comonomer units derived from 1-butene or 1-hexene the ethylene copolymer (C) may preferably comprise an ethylene homopolymer component and a copolymer component of ethylene and 1-butene or 1-hexene.

When being a copolymer of ethylene and the comonomer units derived from 1-butene or 1-hexene the ethylene copolymer (C) may preferably comprise two copolymer components of ethylene and 1-butene or 1-hexene with different comonomer content.

When being a terpolymer of ethylene and the comonomer units derived from 1-butene and 1-hexene the ethylene copolymer (C) may preferably comprise an ethylene homopolymer component, a copolymer component of ethylene and 1-butene and a copolymer component of ethylene and 1-hexene.

When being a terpolymer of ethylene and the comonomer units derived from 1-butene and 1-hexene the ethylene copolymer (C) may alternatively comprise an ethylene homopolymer component and a terpolymer component of ethylene, 1-butene and 1-hexene.

When being a terpolymer of ethylene and the comonomer units derived from 1-butene and 1-hexene the ethylene copolymer (C) may further alternatively comprise a copolymer component of ethylene and 1-butene and a copolymer component of ethylene and 1-hexene.

The ethylene copolymer (C) even more preferably is a linear low density polyethylene (LLDPE).

The ethylene copolymer (C) preferably has an intrinsic viscosity iV of from 1.5 to 2.5 dl/g, more preferably from 1.7 to 2.2 dl/g, determined according to DIN ISO 1628/1, October 1999 (in decalin at 135 °C).

Further, the ethylene copolymer (C) preferably has a ratio of weight average molecular weight to number average molecular weight Mw/Mn of from 2.0 to 5.0, preferably from 2.5 to 4.5, more preferably from 3.0 to 4.0, determined by Gel Permeation Chromatography (GPC) according to ISO 16014-4:2003 and ASTM D 6474-99.

The ethylene copolymer (C) preferably has a Vicat A softening temperature of from 80 to 120°C, preferably from 85 to 110°C, more preferably from 90 to 105°C.

The ethylene copolymer (C) may preferably have a melting temperature of from 100 to 140°C, more preferably from 105 to 130°C, even more preferably from 110 to 125°C.

The ethylene copolymer (C) is preferably obtainable by polymerization in the presence of a single site catalyst system. The single site catalyst system preferably comprises catalytically active metallocene compound or complex combined with a co-catalyst. The metallocene compound or complex is referred herein also as organometallic compound (O).

The organometallic compound (O) comprises a transition metal (M) of Group 3 to 10 of the Periodic Table (IUPAC 2007) or of an actinide or lanthanide.

The term "an organometallic compound (O)" in accordance with the present invention includes any metallocene compound of a transition metal which bears at least one organic (coordination) ligand and exhibits the catalytic activity alone or together with a co-catalyst. The transition metal compounds are well known in the art and preferably cover compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (O) has the following formula (I):

$$(L)_m R_n M X_q \qquad (I)$$

wherein

"M" is a transition metal (M) transition metal (M) of Group 3 to 10 of the Periodic Table (IUPAC 2007),

each "X" is independently a monoanionic ligand, such as a σ-ligand,

each "L" is independently an organic ligand which coordinates to the transition metal "M",

"R" is a bridging group linking said organic ligands (L),

"m" is 1, 2 or 3, preferably 2,

"n" is 0, 1 or 2, preferably 1,

"q" is 1, 2 or 3, preferably 2 and

m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf).

"X" is preferably a halogen, most preferably Cl.

Especially preferably, the organometallic compound (O) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Especially preferred the metallocene catalyst, which means the catalytically active metallocene complex, as defined above, is used together with a co-catalyst, which is also known as an activator. Suitable activators are metal alkyl compounds and especially aluminum alkyl compounds known in the art. Especially suitable activators used with metallocene catalysts are alkylaluminum oxy-compounds, such as methylaluminoxane (MAO), tetraisobutylalumoxane (TIBAO) or hexaisobutylalumoxane (HIBAO).

The ethylene polymer (C) may be contained in the polypropylene composition of the present invention in an amount of from 1 to 30 wt.-%, more preferably in an amount of from 3 to 25 wt.-%, even more preferably in an amount of from 5 to 18 wt.-%, based on the total weight of the polypropylene composition.

When adding the ethylene polymer (C) to the polypropylene composition of the present invention especially low melt flow rates and/or low gel contents (XHU) may be achieved.

## Additives (D)

The polypropylene composition of the present invention may further be obtained in the presence of one or more additive(s).
Additives are preferably selected from the group of modifiers and stabilizers, antistatic agents, lubricants, nucleating agents, and pigments and combinations thereof. The additive more preferably is an antioxidant. Specifically, such additives include primary antioxidants like sterically hindered phenols and secondary antioxidants like phosphites, UV stabilizers like sterically hindered amines, acid scavengers, pigment, $\alpha$-nucleating agents like sodium 2,2'-methylene-bis-(4,6-di-tert-butylphenyl) phosphate or $\beta$-nucleating agents like calcium pimelate, antistatic agents like glycerol monostearate, and slip agents like oleamide.
The additives (D) may be mixed with the propylene copolymer (A) and the radical initiator (B) according to the above step b). This may more preferably be done by melt mixing. The additive(s) (D) may preferably be added in the above step b) in an amount of from 0.05 to 1 wt.-%, more preferably in an amount of from 0.1 to 0.8 wt.-%, even more preferably in an amount of from 0.2 to 0.5 wt.-%, based on the total weight of the polypropylene composition.

## Polypropylene composition

The polypropylene composition of the present invention is characterized by having a $MFR_2$ (2.16 kg, 230 °C, ISO 1133) of 0.1 to 0.9 g/10min, and a xylene hot insoluble content (XHU) determined as described in the experimental section below, of 0.01 to 0.65 wt.-%, based on the total weight of the polypropylene composition.
The polypropylene composition of the present invention may preferably have a $MFR_2$ (2.16 kg, 230 °C, ISO 1133) of 0.15 to 0.8 g/10min, more preferably of 0.2 to 0.75 g/10min.
The polypropylene composition of the present invention may preferably have a xylene hot insoluble content (XHU) determined as described in the experimental section below, of 0.05 to 0.6 wt.-%, more preferably of 0.1 to 0.5 wt.-%, based on the total weight of the polypropylene composition.
The polypropylene composition of the present invention may preferably have a xylene soluble content (XCS) determined as described in the experimental section below, of 5 to 20 wt.-%, more preferably of 8 to 18 wt.-%, based on the total weight of the polypropylene composition.
The polypropylene composition of the present invention may preferably have a melt flow rate (MFR) reduction of at least 45 %, more preferably at least 50 %, even more preferably at least 55 %. The MFR reduction is defined as the $MFR_2$ value (2.16 kg, 230 °C, ISO 1133) in g/10 min. of the polypropylene composition of the present invention, compared to the $MFR_2$ value (2.16 kg, 230 °C, ISO 1133) in g/10 min. of a comparative polypropylene composition comprising a propylene copolymer having a $MFR_2$ (2.16 kg, 230 °C, ISO 1133) within the range of from 1 to 3 g/10min and comprising a content of one or more $C_2$ or $C_4$ to $C_{12}$ alpha-olefin comonomer(s) in the range of from 1 to 10 wt.-% based on the total weight of the propylene copolymer and prepared in the absence of a radical initiator (B).
The polypropylene composition of the present invention may preferably have a ratio of melt flow rate (MFR) reduction to the content of xylene hot insoluble content (XHU) [MFR reduction/XHU] of at least 150, more preferably at least 175, even more preferably at least 200. The MFR reduction is determined as described above and the XHU content is in wt.-%, based on the total weight of the polypropylene composition and determined as described in the experimental part below. The value indicates the joint effect of MFR reduction and low level of XHU content. The higher the value, the more pronounced the effect is.
The polypropylene composition of the present invention may preferably have a melting temperature Tm, determined by differential scanning calorimetry (DSC) as described in the experimental section below, of 125 to 150°C, more preferably of 128 to 145°C,. even more preferably of 130 to 140°C. The polypropylene composition may preferably have more than one, e.g. two melting temperatures Tm1 and Tm2.
The polypropylene composition of the present invention may preferably have a crystallization temperature Tc, determined by differential scanning calorimetry (DSC) as described in the experimental section below, of 95 to 120°C, more preferably of 100 to 110°C.
The polypropylene composition of the present invention may preferably have a Charpy notched impact strength (NIS), determined according to according to ISO 179 1eA at +23 °C and 0 °C, using injection moulded bar test specimens of 80x10x4 $mm^3$ prepared in accordance with EN ISO 1873-2 in the range of from 3 to 20 $kJ/m^2$.

## Method

The polypropylene composition of the present invention is obtainable or is obtained by a process comprising the above steps a) to c).
The propylene copolymer (A) is preferably obtained by polymerization in at least two successive polymerization reactors ("multistage process"), more preferably at least one slurry phase reactor (e.g. loop reactor) and at least one gas

phase reactor. A prepolymerization step may be conducted before feeding the prepolymerization product to the slurry phase reactor.

A preferred multistage process is a "loop-gas phase"-process, such as developed by Borealis (known as BORSTAR® technology) described e.g. in patent literature, such as in EP 0 887379 A1, WO 92/12182 A1, WO 2004/000899 A1, WO 2004/111095 A1, WO 99/24478 A1, WO 99/24479 A1 or in WO 00/68315 A1. A further suitable slurry-gas phase process is the Spheripol® process.

The propylene copolymer (A) is preferably obtainable by a catalyst system comprising an asymmetric metallocene catalyst. The catalyst system may further comprise an activator as a co-catalyst, as described in WO 03/051934 A1.

An asymmetric metallocene catalyst according to the present invention is a catalyst comprising at least two organic ligands which differ in their chemical structure.

Preferably, the asymmetric catalyst employed comprises an organometallic compound of a transition metal of group 3 to 10 or the periodic table (IUPAC) or of an actinide or lanthanide.

Said asymmetric catalyst is preferably a single site catalyst (SSC).

According to a preferred embodiment said asymmetric catalyst a transition metal compound. Said metallocenes bear at least one organic ligand, generally 1, 2 or 3, e.g. 1 or 2, which is $\eta$-bonded to the metal, e.g. a $\eta^{2-6}$-ligand, such as a $\eta^5$-ligand. Preferably, a metallocene is a Group 4 to 6 transition metal, more preferably zirconium, hafnium or itanium, which contains at least one $\eta^5$-ligand.

The catalyst system may preferably used in supported form. The particulate support material may be silica or a mixed oxide such as silica-alumina, in particular silica.

Such asymmetric catalysts and transition metal compound useful for the process of the present invention, their preparation and their properties are described e.g. in WO 2021/001176 A1 or EP 2 520 425 A1.

The propylene copolymer (A) may preferably further subjected to a melt-extrusion step in order to reduce melt flow rate and increase molecular weight of the final polypropylene composition.

The propylene copolymer (A) obtained after the above step a)is mixed in the presence of the radical initiator (B) as described above. This mixing step is often referred to as "post-reactor modification" or "reactive modification". Mixing step b) may preferably be conducted by melt mixing said propylene copolymer (A) with the radical initiator (B) in a melt mixing device, such as an extruder. The melt mixing step may more preferably conducted in an extruder at a barrel temperature within the range of from 160 to 280°C.

It is especially preferred that for the reactive modification no functionally unsaturated compound chosen from:

a) bifunctionally unsaturated monomers and/or polymers or

b) multifunctionally unsaturated monomers and/or polymers or

c) a mixture of (a) and (b)

is present.

"Bifunctionally unsaturated or multifunctionally unsaturated" as used above means that the compound contains two or more non-aromatic double bonds, respectively. Examples are e.g. divinylbenzene, cyclopentadiene or polybutadiene.

The optional ethylene polymer (C) may preferably be added during the mixing step (b) so that the extrusion takes place in the presence of said ethylene polymer (C).

Suitably said melt mixing device is a continuous melt mixing device like for example a single screw extruder, a co-rotating twin screw extruder or a co-rotating kneader. Preferably, the melt mixing device includes a feed zone, a kneading zone and a die zone. Specific conditions during the mixing step (b) and the reacting step (c) and in the melt-mixing process useful in the present invention are described in WO 2021/001176 A1 or EP 2 520 425 A1.

Following the mixing step (b), the resulting polymer melt comprising the propylene copolymer (A) and the radical initiator (B) is reacted according to above step (c) at a temperature within the range of from 150 to 300 °C, preferably at a temperature within the range of from 180 to 260 °C to obtain the final polypropylene composition of the present invention. Preferably, the resulting polymer melt is pelletized in an underwater pelletizer or after solidification of one or more strands in a water bath in a strand pelletizer.

**Articles**

The present invention is further concerned with an article comprising, preferably consisting of, the polypropylene composition of the present invention. Preferably, the article is a pipe or a supplementary pipe article such as a pipe fitting comprising, preferably consisting of the polypropylene composition of the present invention.

**Use**

The present invention is further concerned with the use of the polypropylene composition of the present invention for making an article, preferably a pipe or a supplementary pipe article by compounding, preferably extruding said polypropylene composition.

## Examples

### A. Measurement methods

#### a) Melt Flow Rate

The melt flow rate (MFR) is was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was measured at a temperature of 230 °C and a load of 2.16 kg and the $MFR_2$ of polyethylene was measured at a temperature of 190 °C and a load of 2.16 kg.

#### b) **Density**

Density of the polymer was measured according to ISO 1183-1:2004 Method A on compression moulded specimen prepared according to EN ISO 1872-2 (Feb 2007) and is given in $kg/m^3$.

#### c) Quantification of microstructure by NMR spectroscopy

Quantitative nuclear-magnetic resonance (NMR) spectroscopy was used to quantify the comonomer content, molecular chain length and the degree of polymerization of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 16348 (16k) transients were acquired per spectrum. This setup was chosen due its high sensitivity towards sometimes low comonomer contents.

Quantitative $^{13}C\{^1H\}$ NMR spectra were processed, integrated and quantitative properties determined using custom spectral analysis automation programs. All chemical shifts are internally referenced to the bulk methylene signal (δ +) at 30.00 ppm (J. Randall, Macromol. Sci., Rev. Macromol. Chem. Phys. 1989, C29, 201).

Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.

Characteristic signals resulting from isolated 1-hexene incorporation i.e. EEHEE comonomer sequences, were observed. Isolated 1-hexene incorporation was quantified using the integral of the signal at 38.2 ppm assigned to the *B4 sites, accounting for the number of reporting sites per comonomer:

$$H = I_{*B4}$$

When characteristic signals resulting from consecutive 1-hexene incorporation, i.e. EHHE comonomer sequences were observed, such consecutive 1-hexene incorporation was quantified using the integral of the signal at 40.4 ppm assigned to the ααB4B4 sites accounting for the number of reporting sites per comonomer:

$$HH = 2 * I_{\alpha\alpha B4B4}$$

When characteristic signals resulting from non consecutive 1-hexene incorporation, i.e. EHEHE comonomer sequences were observed, such non-consecutive 1-hexene incorporation was quantified using the integral of the signal at 24.6 ppm assigned to the ββB4B4 sites accounting for the number of reporting sites per comonomer:

$$HEH = 2 * I_{\beta\beta B4B4}$$

Due to the overlap of the signals from the *B4 and *βB4B4 sites from isolated (EEHEE) and non-consecutively incorporated (EHEHE) 1-hexene respectively the total amount of isolated 1-hexene incorporation is corrected based on the amount of non-consecutive 1-hexene present:

$$H = I_{*B4} - 2 * I_{\beta\beta B4B4}$$

With no other signals indicative of other comonomer sequences, i.e. 1-hexene chain initiation, observed the total 1-hexene comonomer content was calculated based solely on the amount of isolated (EEHEE), consecutive (EHHE) and non-consecutive (EHEHE) 1-hexene comonomer containing sequences:

$$H_{total} = H + HH + HEH$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The relative content of ethylene was quantified using the integral of the bulk methylene (δ+) signals at 30.00 ppm:

$$E = (1/2)*I_{\delta+}$$

The total ethylene content was calculated based the bulk methylene signals and accounting for ethylene units present in other observed comonomer sequences or end-groups:

$$E_{total} = E + (2/2)*H + (1/4)*HH + (3/4)*HEH + (3/2)*S$$

The total mole fraction of 1-hexene in the polymer was then calculated as:

$$fH = H_{total} / ( E_{total} + H_{total} )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1-fH) * 28.05) )$$

The comonomer incorporation of 1-hexene in mole percent in high Mw fraction was calculated from the total comonomer incorporation in the usual manner:

$$H \text{ in } HMW [mol\%] = 100 \% * H [mol\%] / \text{Split of HMW fraction } \%$$

**d) Differential scanning calorimetry (DSC)**

Differential scanning calorimetry (DSC) analysis, melting temperature ($T_m$), melt enthalpy ($H_m$), and crystallization temperature ($T_c$) were measured with a TA Instrument Q200 differential scanning calorimetry (DSC) on 5 to 7 mg samples. DSC was run according to ISO 11357 / part 3 /method C2 in a heat / cool / heat cycle with a scan rate of 10°C/min in the temperature range of -30 to +225°C. Crystallization temperature ($T_c$) was determined from the cooling step, while melting temperature ($T_m$) and melt enthalpy (Hm) were determined from the second heating step.

Throughout the patent the term Tc is understood as peak temperature of crystallization as determined by DSC at a cooling rate of 10 K/min.

**e) XHU** gel level

About 2 g of the polymer ($m_p$) are weighted and put in a mesh of metal which is weighted ($m_{p+m}$). The polymer in the mesh is extracted in a soxhlet apparatus with boiling xylene for 5 hours. The eluent is then replaced by fresh xylene and the boiling is continued for another hour. Subsequently, the mesh is dried and weighted again ($m_{XHU+m}$). The mass of the xylene hot unsolubles $m_m$-$m_{XHU+m}$=$m_{XHU}$ is put in relation to the weight of the polymer to obtain the fraction of xylene insolubles $m_{XHU}/m_p$.

**f) Xylene cold solubles (XCS)**

The amount of the polymer soluble in xylene is determined at 25.0 °C according to 180 16152; 5 edition: 2005-07-01.

**g) Charpy notched impact strength (NIS)**

Charpy notched impact strength was determined according to ISO179/1eA:2000 on V-notched samples of 80*10*4 mm at +23 °C and 0 °C. Samples were milled from plaques of 4 mm thickness prepared by compression molding according to ISO 293:2004 using the conditions defined in chapter 3.3 of ISO 1872-2:2007.

**B. Materials**

**Preparation of propylene copolymer (A)**

Propylene copolymer PP-1 and PP-2 were produced in pilot scale with reactor set-up including a prepolymerization reactor, one slurry loop reactor and one gas phase reactor in the presence of a single site catalyst system which was prepared as described in WO 2021/001176 A1 ("single site catalyst system 1"). The feeds and polymerization conditions are listed in Table 1.

**Table 1**

| | | **PP-1** | **PP-2** |
|---|---|---|---|
| Prepolymerizor | | | |
| T | °C | 20 | 20 |
| Residence time | min | 20 | 20 |
| Loop | | | |
| T | °C | 70 | 75 |
| Pressure | kPa | 4942 | 4544 |
| Feed H2/C3 | mol/kmol | 0.1 | 0 |
| Feed C6/C3 | mol/kmol | 8 | 3.3 |
| Split | wt% | 40 | 47.3 |
| $MFR_2$ | g/10min | 2.5 | 0.54 |
| C6 | wt% | 1.8 | 1.1 |

(continued)

| | | | |
|---|---|---|---|
| GPR1 | | | |
| T | °C | 80 | 80 |
| Pressure | kPa | 2500 | 2400 |
| H2/C3 | mol/kmol | 0.9 | 0.52 |
| C6/C3 | mol/kmol | 9.3 | 4.4 |
| Residence time | h | 2.5 | 3.6 |
| Split | wt% | 60 | 52.7 |
| $MFR_2$ | g/10min | 1.4 | 0.37 |
| C6 | wt% | 4.5 | 2.3 |
| Total production rate | kg/h | 86.9 | 68.5 |
| | | | |
| Final(powder) | | | |
| catalyst yield | kg/g | 39 | 19 |
| $MFR_2$ | g/10min | 1.4 | 0.34 |
| C6 | wt% | 4.3 | 2.3 |
| XCS | wt% | 8.8 | 0.66 |

PP-1 and PP-2 were prepared in the same manner with the same catalyst system, but using different reactor conditions in order to produce different MFRs and to show different yields and throughputs. When conducting the polymerization at higher MFR such as in PP-1, the catalyst has a higher yield and the plant can be operated at a higher throughput, thus reducing $CO_2$ emissions.

PP-2 has an MFR suitable for pipe as such without any modification but because of lower yield and throughput and scrap produced between prime grades having different MFRs, it is desirable to produce materials suitable for pipe applications without the above drawbacks. This is shown by the inventive examples IE1 to IE4 below.

PP-3 is a propylene homopolymer, which is produced in pilot scale with one loop reactor. The catalyst used is Avant ZN180M, commercially available from LyondellBasell. The typical condition: TEAL 170 g/t $C_3$, dicyclopentyl dimethoxy silane donor 10g/t $C_3$, reactor temperature 75°C, $H_2$ 750 ppm, $MFR_2$ 3 g/10min, XCS 2.5 wt.-%.

**Ethylene polymer (C)**

Ethylene polymer (C) (PE-C) consists of the metallocene catalyzed linear low density polyethylene of example IE1 of EP 3 257 895 A1 having a 1-butene content of 0.3 mol-% (0.6 wt.-%), a 1-hexene content of 2.6 mol-% (8.1 wt.-%), density of 918 kg/m$^3$, a melt flow rate $MFR_2$ of 1.5 g/10 min, a melting temperature of 122°C and a Vicat A temperature of 102°C.

**Additives (D)**

As an antioxidant Irganox® B 215 (Add-1) was used, produced and supplied by BASF.

As a further additive calcium stearate (Add-2) was used, commercialized under the name of CEASIT FI, produced and supplied by Bärlocher.

As a further additive synthetic hydrotalcite (Add-3) was used, commerzialized under the name DHT-4V, available from Kisuma.

Perkadox® 24L (POX) is supplied by Nouryon Functional Chemical B.V., Herkenbosch, The Netherlands.

**Preparation of polypropylene compositions**

Polypropylene samples were produced by melt-mixing and extruding PP-1 and PP-3, respectively in the presence of a radical initiator (B) (Perkadox® 24L), which is dicetyl peroxydicarbonate, optionally in the presence of ethylene polymer (C) and additives (Add1-3) as given in Table 2 below. The compounding was done on a ZSK-18 twin screw extruder, with melt temperature of 210°C, throughput 7 kg/h.

Table 2

| | | IE1 | IE2 | IE3 | IE4 | CE1 | CE2 | CE3 |
|---|---|---|---|---|---|---|---|---|
| PP-1 | wt.-% | 99.1 | 98.7 | 84.1 | 83.7 | 99.7 | 84.7 | |
| PP-3 | wt.-% | | | | | | | 97.7 |
| Add-1 | wt.-% | 0.2 | 0.2 | 0.2 | 0.2 | 0.2 | 0.2 | 0.2 |
| Add-2 | wt.-% | 0.05 | 0.05 | 0.05 | 0.05 | 0.05 | 0.05 | 0.05 |
| Add-3 | wt.-% | 0.05 | 0.05 | 0.05 | 0.05 | 0.05 | 0.05 | 0.05 |
| PE-C | wt.-% | | | 15 | 15 | | 15 | |
| POX | wt.-% | 0.6 | 1 | 0.6 | 1 | 0 | 0 | 2 |
| $MFR_2$ | g/10min | 0.68 | 0.38 | 0.42 | 0.26 | 1.64 | 1.63 | 0.84 |
| XHU | wt.-% | 0.23 | 0.37 | 0.21 | 0.41 | 0.1 | 0.07 | 0.7 |
| XCS | wt.-% | 14.11 | 15.01 | 12.84 | 13.82 | 11.4 | 9.11 | 2.36 |
| Tc | °C | 103 | 104 | 104 | 105 | 99 | 98 | 132 |
| Tm1 | °C | 136 | 137 | 137 | 137 | 136 | 136 | 166 |
| Tm2 | °C | | | 121 | 120 | | 122 | 112 |
| Hm1 | J/g | 69 | 70 | 25 | 24 | 72 | 25 | |
| Hm2 | J/g | | | 48 | 49 | | 46 | |
| MFR reduction | % | 59 | 77 | 74 | 84 | 0 | 0 | 72 |
| MFR reduction/ XHU | | 255 | 208 | 353 | 205 | 0 | 0 | 103 |

As can be seen, from Table 2 above, the polypropylene samples according to IE1-4 obtained after extrusion have significantly reduced MFR, compared to the comparative examples CE1-2, which were prepared in the absence of the radical initiator (B) of the present invention. The effect is even more pronounced when the sample is prepared in the presence of component (C/PE-C) (see IE3 and 4). Gel levels (XHU) of polypropylene samples IE1-4 are low.

Comparative Example CE3 was prepared with PP-3 which is a propylene homopolymer and with a major amount of the radical initiator (POX) to reduce the MFR of the product ($MFR_2$: 0.84 g/10 min). However, still the MFR reduction was insufficient especially for use in pipe applications and at the same time, the XHU level increased as high as 0.7 wt.-%, which is undesirable because of high gel contents.

One further advantage of the present invention is the capability of modifying blown film grade polypropylenes (which usually have relatively high MFR) to achieve pipe grades (which require significantly reduced MFR) in the plant extruder without having to change the reactor settings. Considering the residence time in the reactors and the time needed to adjust the plant settings in the process of grade change, the present invention enables high amount of saving by substantially reducing low value waste production and thus saving valuable resources.

## Claims

**1.** A polypropylene composition having a $MFR_2$ (2.16 kg, 230 °C, ISO 1133) within the range of from 0.1 to 0.9 g/10min, and a xylene hot insoluble content (XHU) determined as described in the experimental section, within the range of from 0.01 to 0.65 wt.-%. based on the total weight of the polypropylene composition, said polypropylene composition being obtainable or obtained according to a process comprising the following steps:

a) providing a propylene copolymer (A) having a $MFR_2$ (2.16 kg, 230 °C, ISO 1133) within the range of from 1 to 3 g/10min and comprising a content of one or more $C_2$ or $C_4$ to $C_{12}$ alpha-olefin comonomer(s) in the range of from 1 to 10 wt.-% based on the total weight of the propylene copolymer (A), preferably further melting the propylene copolymer (A) in an extruder;
b) mixing said propylene copolymer (A) in an amount within the range of from 67.0 to 99.5 wt.-% with a radical initiator (B) in an amount within the range of from 0.1 to 2.0 wt.-%, each based on the total weight of a resulting mixture, the radical initiator (B) being selected from the group consisting of the peroxy compounds according to the following formulae (I) to (III),

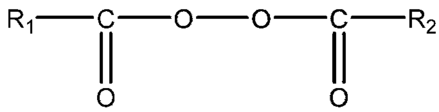

(I),

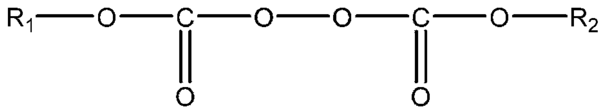

(II),

and

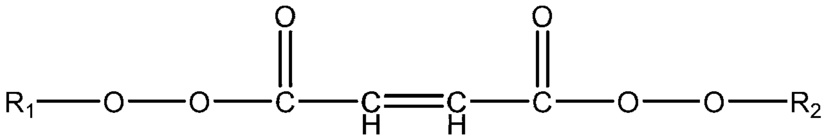

(III),

and any mixtures thereof, wherein $R_1$ and $R_2$ are each independently selected from alkyl groups having from 2 to 30 carbon atoms, and which may be cyclic, linear, branched or unbranched, wherein $R_1$ and $R_2$ may be the same or different, preferably melt mixing said propylene copolymer (A) with the radical initiator (B) in a melt mixing device, such as an extruder,

c) reacting said propylene copolymer (A) and the radical initiator (B) at a temperature within the range of from 150 to 300 °C, thereby obtaining the polypropylene composition.

**2.** The polypropylene composition according to claim 1, wherein propylene copolymer (A) is a random propylene copolymer and/or
the one or more alpha-olefin comonomer(s) of the propylene copolymer (A) is/are selected from $C_4$ to $C_{12}$ alpha-olefins, preferably from the group consisting of 1-butene, 1-hexene and 1-octene.

**3.** The polypropylene composition according to claim 1 or 2, wherein the radical initiator (B) is selected from the group consisting of di-(2-ethylhexyl) peroxydicarbonate, di-(4-tert-butylcyclohexyl) peroxydicarbonate, dicetyl peroxydicarbonate, dimyristyl peroxydicarbonate, and any mixtures thereof, preferably the radical initiator (B) is a dialkyl peroxydicarbonate of Formula (II), more preferably the radical initiator (B) is dicetyl peroxydicarbonate.

**4.** The polypropylene composition according to any one of the preceding claims, wherein in step b), an ethylene polymer (C) is further mixed with the propylene copolymer (A) and the radical initiator (B) in an amount within the range of from 1 to 30 wt.-%, based on the total weight of a resulting mixture, and/or
an additive (D) is further mixed with the propylene copolymer (A) and the radical initiator (B) in an amount within the range of from 0.05 to 1 wt.-%, based on the total weight of a resulting mixture, the additive preferably being an antioxidant.

**5.** The polypropylene composition according to claim 4, wherein the ethylene polymer (C) is an ethylene polymer prepared in the presence of a single site catalyst, preferably a metallocene catalyst.

**6.** The polypropylene composition according to claim 4 or 5, wherein the ethylene polymer (C) has a density (ISO 1183-1:2012) within the range of from 900 to 960 kg/$m^3$ and a $MFR_2$ (2.16 kg, 190 °C, ISO 1133) within the range of from 0.01 to 5.0 g/10 min, and/or
wherein the ethylene polymer (C) is a bimodal ethylene co- or terpolymer.

**7.** The polypropylene composition according to any one of the preceding claims, wherein the polypropylene composition has a melt flow rate (MFR) reduction of at least 45 %, the MFR reduction being defined as the $MFR_2$ value (2.16 kg, 230 °C, ISO 1133) in g/10 min of the polypropylene composition, compared to the $MFR_2$ value (2.16 kg, 230 °C, ISO 1133) in g/10 min of a comparative polypropylene composition comprising a propylene copolymer having a $MFR_2$ (2.16 kg, 230 °C, ISO 1133) within the range of from 1 to 3 g/10min and comprising a content of one or more $C_2$ or $C_4$ to $C_{12}$ alpha-olefin comonomer(s) in the range of from 1 to 10 wt.-% based on the total weight of the propylene copolymer and prepared in the absence of a radical initiator (B), and/or
wherein the polypropylene composition has a ratio of melt flow rate (MFR) reduction to the content of xylene hot

insoluble content (XHU) [MFR reduction/XHU] of at least 150, wherein the MFR reduction is in % defined as above and the XHU content is in weight%, based on the total weight of the polypropylene composition, determined as described in the specification.

**8.** A process for producing a polypropylene composition, comprising the following steps:

a) providing a propylene copolymer (A) having a $MFR_2$ (2.16 kg, 230 °C, ISO 1133) within the range of from 1 to 3 g/10min and comprising a content of one or more $C_2$ or $C_4$ to $C_{12}$ alpha-olefin comonomer(s) in the range of from 1 to 10 wt.-% based on the total weight of the propylene copolymer (A), preferably further melting the propylene copolymer (A) in an extruder;
b) mixing said propylene copolymer (A) in an amount within the range of from 67.0 to 99.5 wt.-% in the presence of a radical initiator (B) in an amount within the range of from 0.1 to 2.0 wt.-%, each based on the total weight of a resulting mixture, the radical initiator (B) being selected from the group consisting of the peroxy compounds according to the following formulae (I) to (III):

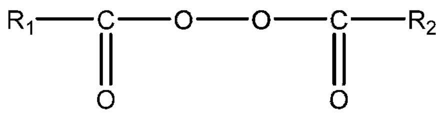

(I),

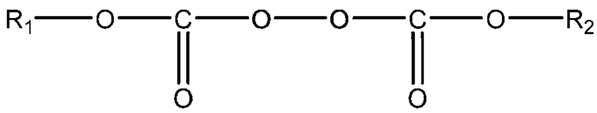

(II),

and

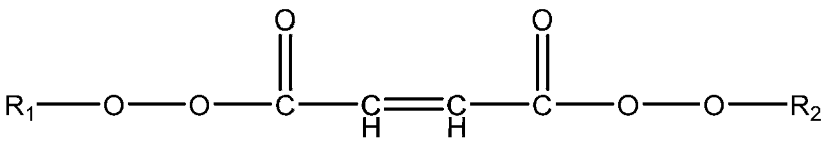

(III),

and any mixtures thereof, wherein $R_1$ and $R_2$ are each independently selected from alkyl groups having from 2 to 30 carbon atoms, and which may be cyclic, linear, branched or unbranched, wherein $R_1$ and $R_2$ may be the same or different, preferably melt mixing said propylene copolymer (A) with the radical initiator (B) in a melt mixing device, such as an extruder; and
c) reacting said propylene copolymer (A) and the radical initiator (B) at a temperature within the range of from 150 to 300 °C, thereby obtaining the polypropylene composition, said polypropylene composition having a $MFR_2$ (2.16 kg, 230 °C, ISO 1133) within the range of from 0.1 to 0.9 g/10min, and a xylene hot insoluble content (XHU), determined as described in the experimental section, within the range of from 0.01 to 0.65 wt.-% based on the total weight of the polypropylene composition.

**9.** The process according to claim 8, wherein in step c), the propylene copolymer (A) and the radical initiator (B) are melt mixed in a melt mixing device, such as an extruder, preferably at a barrel temperature within the range of from 160 to 280°C.

**10.** The process according to claim 8 or 9, wherein step c) is conducted in the presence of an ethylene polymer (C).

**11.** An article comprising the polypropylene composition according to any one of the preceding claims 1 to 7.

**12.** The article according to claim 11, which is a pipe or a supplementary pipe article.

**13.** Use of the polypropylene composition according to any one of the preceding claims 1 to 7 for making an article, preferably a pipe or a supplementary pipe article.

**Patentansprüche**

1. Eine Polypropylen-Zusammensetzung, die eine Schmelzflussrate ($MFR_2$) (2,16 kg, 230°C, ISO 1133) im Bereich von 0,1 bis 0,9 g/10 min aufweist und einen Xylen-Heißunlöslichkeitsgehalt (Xylene Hot Insoluble Content bzw. XHU), bestimmt wie in dem Experiment-Abschnitt beschrieben, im Bereich von 0,01 bis 0,65 Gew.-% basierend auf dem Gesamtgewicht der Polypropylen-Zusammensetzung umfasst, wobei die Polypropylen-Zusammensetzung gemäß einem die folgenden Schritte umfassenden Prozess erhalten werden kann oder erhalten wird:

   a) Vorsehen eines Propylen-Copolymers (A), das eine Schmelzflussrate ($MFR_2$) (2,16 kg, 230°C, ISO 1133) im Bereich von 1 bis 3 g/10 min aufweist und einen Anteil eines oder mehrerer $C_2$ oder $C_4$ bis $C_{12}$-Alphaolefin-Comonomere im Bereich von 1 bis 10 Gew.-% basierend auf dem Gesamtgewicht des Propylen-Copolymers (A) umfasst, und vorzugsweise weiterhin Schmelzen des Propylen-Copolymers (A) in einem Extruder,
   b) Mischen des Propylen-Copolymers (A) mit einem Anteil im Bereich von 67,0 bis 99,5 Gew.-% mit einem Radikalinitiator (B) mit einem Anteil im Bereich von 0,1 bis 2,0 Gew.-%, basierend jeweils auf dem Gesamtgewicht einer resultierenden Mischung, wobei der Radikalinitiator (B) aus der Gruppe ausgewählt wird, die aus den Peroxy-Verbindungen gemäß den folgenden Formeln (I) bis (III)

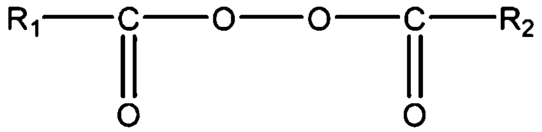

(I),

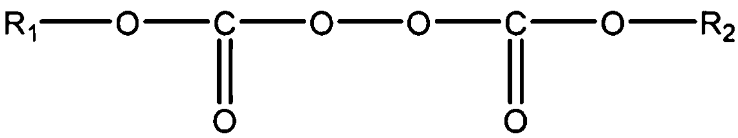

(II),

und

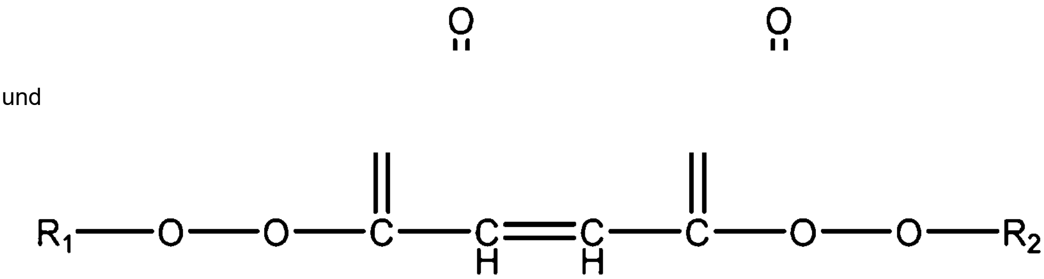

(III),

   und Mischungen aus diesen besteht, wobei $R_1$ und $R_2$ jeweils unabhängig aus Alkylgruppen mit jeweils 2 bis 30 Kohlenstoffatomen, die cyclisch, linear, verzweigt oder unverzweigt sein können, ausgewählt werden, wobei $R_1$ und $R_2$ gleich oder verschieden sein können, und vorzugsweise Schmelzmischen des Propylen-Copolymers (A) mit dem Radikalinitiator (B) in einer Schmelzmischvorrichtung wie etwa einem Extruder,
   c) Reagieren des Propylen-Copolymers (A) und des Radikalinitiators (B) bei einer Temperatur im Bereich von 150 bis 300 °C, um dadurch eine Polypropylen-Zusammensetzung zu erhalten.

2. Polypropylen-Zusammensetzung nach Anspruch 1, wobei der Propylen-Copolymer (A) ein statistisches Propylen-Copolymer ist, und/oder das eine oder die mehreren Alphaolefin-Copolymere des Propylen-Copolymers (A) aus $C_4$ bis $C_{12}$ Alphaolefinen und vorzugsweise aus der Gruppe, die aus 1-Buten, 1-Hexen und 1-Octen besteht, ausgewählt sind.

3. Polypropylen-Zusammensetzung nach Anspruch 1 oder 2, wobei der Radikalinitiator (B) aus der Gruppe ausgewählt ist, die aus Di-(2-ethylhexyl)peroxydicarbonat, Di-(4-tert-butylcyclohexyl)peroxydicarbonat, Dicetylperoxydicarbonat, Dimyristylperoxydicarbonat und Mischungen aus diesen besteht, wobei der Radikalinitiator (B) vorzugsweise ein Dialkylperoxydicarbonat der Formel (II) ist und wobei der Radikalinitiator (B) noch besser Dicetylperoxydicarbonat ist.

4. Polypropylen-Zusammensetzung nach einem der vorstehenden Ansprüche, wobei in dem Schritt b) ein Ethylen-Polymer (C) weiterhin mit dem Propylen-Copolymer (A) und dem Radikalinitiator (B) mit einem Anteil im Bereich von 1 bis 30 Gew.-% basierend auf dem Gesamtgewicht einer resultierenden Mischung gemischt wird, und/oder
ein Zusatz (D) weiterhin mit dem Propylen-Copolymer (A) und dem Radikalinitiator (B) mit einem Anteil im Bereich von 0,05 bis 1 Gew.-% basierend auf dem Gesamtgewicht einer resultierenden Mischung gemischt wird, wobei der Zusatz vorzugsweise ein Antioxidationsmittel ist.

**5.** Polypropylen-Zusammensetzung nach Anspruch 4, wobei das Ethylen-Polymer (C) ein in Anwesenheit eines Single-Site-Katalysators und vorzugsweise eines Metallocen-Katalysators vorbereitetes Ethylen-Polymer ist.

**6.** Polypropylen-Zusammensetzung nach Anspruch 4 oder 5, wobei das Ethylen-Polymer (C) eine Dichte (ISO 1183-1:2012) im Bereich von 900 bis 960 kg/$m^3$ und eine Schmelzflussrate ($MFR_2$) (2,16 kg, 190°C, ISO 1133) im Bereich von 0,1 bis 5,0 g/10 min aufweist, und/oder
wobei das Ethylen-Polymer (C) ein bimodales Ethylen-Co- oder Terpolymer ist.

**7.** Polypropylen-Zusammensetzung nach einem der vorstehenden Ansprüche, wobei die Polypropylen-Zusammensetzung eine Schmelzflussraten (MFR)-Reduktion von wenigstens 45% aufweist, wobei die MFR-Reduktion als der $MFR_2$-Wert (2,16 kg, 230°C, ISO 1133) in g/10 min der Polypropylen-Zusammensetzung im Vergleich zu dem $MFR_2$-Wert (2,16 kg, 230°C, ISO 1133) in g/10 min einer vergleichbaren Polypropylen-Zusammensetzung, die ein Propylen-Copolymer mit einer Schmelzflussrate ($MFR_2$) (2,16 kg, 230°C, ISO 1133) im Bereich von 1 bis 3 g/10 min und einem Anteil eines oder mehrerer $C_2$ oder $C_4$ bis $C_{12}$-Alphaolefin-Comonomere im Bereich von 1 bis 10 Gew.-% basierend auf dem Gesamtgewicht des Propylen-Copolymers umfasst und in Abwesenheit eines Radikalinitiators (B) vorbereitet wird, definiert ist, und/oder
wobei die Polypropylen-Zusammensetzung ein Verhältnis einer Schmelzflussraten (MFR)-Reduktion zu dem Anteil des Xylen-Heißunlöslichkeitsgehalts (Xylene Hot Insoluble Content bzw. XHU) von wenigstens 150 aufweist, wobei die MFR-Reduktion in % wie oben genannt definiert ist und der XHU-Gehalt in Gew.% basierend auf dem Gesamtgewicht der Polypropylen-Zusammensetzung bestimmt wie in der Beschreibung beschrieben definiert ist.

**8.** Verfahren zum Herstellen einer Polypropylen-Zusammensetzung, das die folgenden Schritte umfasst:

a) Vorsehen eines Propylen-Copolymers (A), das eine Schmelzflussrate ($MFR_2$) (2,16 kg, 230°C, ISO 1133) im Bereich von 1 bis 3 g/10 min aufweist und einen Anteil eines oder mehrerer $C_2$ oder $C_4$ bis $C_{12}$-Alphaolefin-Comonomere im Bereich von 1 bis 10 Gew.-% basierend auf dem Gesamtgewicht des Propylen-Copolymers (A) umfasst, und vorzugsweise weiterhin Schmelzen des Propylen-Copolymers (A) in einem Extruder,
b) Mischen des Propylen-Copolymers (A) mit einem Anteil im Bereich von 67,0 bis 99,5 Gew.-% in Anwesenheit eines Radikalinitiators (B) mit einem Anteil im Bereich von 0,1 bis 2,0 Gew.-%, basierend jeweils auf dem Gesamtgewicht einer resultierenden Mischung, wobei der Radikalinitiator (B) aus der Gruppe ausgewählt wird, die aus den Peroxy-Verbindungen gemäß den folgenden Formeln (I) bis (III)

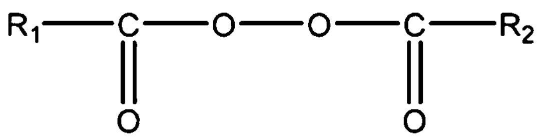

(I),

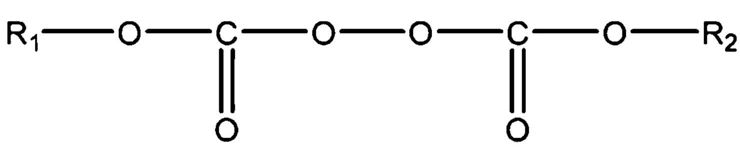

(II),

und

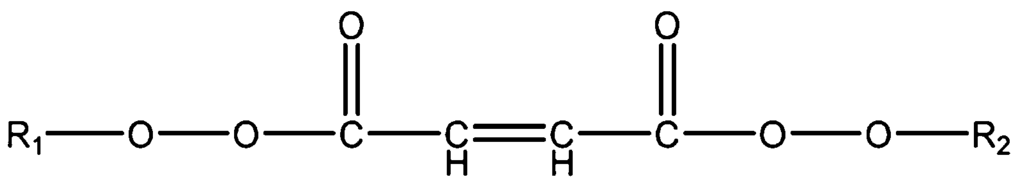

(III),

und Mischungen aus diesen besteht, wobei $R_1$ und $R_2$ jeweils unabhängig aus Alkylgruppen mit jeweils 2 bis 30 Kohlenstoffatomen, die cyclisch, linear, verzweigt oder unverzweigt sein können, ausgewählt werden, wobei $R_1$ und $R_2$ gleich oder verschieden sein können, und vorzugsweise Schmelzmischen des Propylen-Copolymers (A) mit dem Radikalinitiator (B) in einer Schmelzmischvorrichtung wie etwa einem Extruder,

c) Reagieren des Propylen-Copolymers (A) und des Radikalinitiators (B) bei einer Temperatur im Bereich von 150 bis 300 °C, um dadurch eine Polypropylen-Zusammensetzung zu erhalten, wobei die Polypropylen-Zusammensetzung eine Schmelzflussrate ($MFR_2$) (2,16 kg, 230°C, ISO 1133) im Bereich von 0,1 bis 0,9 g/10 min und einen Xylen-Heißunlöslichkeitsgehalt (Xylene Hot Insoluble Content bzw. XHU), bestimmt wie in dem Experiment-Abschnitt beschrieben, im Bereich von 0,01 bis 0,65 Gew.-% basierend auf dem Gesamtgewicht der Polypropylen-Zusammensetzung aufweist.

**9.** Verfahren nach Anspruch 8, wobei in dem Schritt c) das Propylen-Copolymer (A) und der Radikalinitiator (B) in einer Schmelzmischvorrichtung wie etwa einem Extruder vorzugsweise bei einer Zylindertemperatur im Bereich von 160 bis 280°C schmelzgemischt werden.

**10.** Verfahren nach Anspruch 8 oder 9, wobei der Schritt c) in Anwesenheit eines Ethylen-Polymers (C) durchgeführt wird.

**11.** Artikel, der die Polypropylen-Zusammensetzung gemäß einem der vorstehenden Ansprüche 1 bis 7 aufweist.

**12.** Artikel nach Anspruch 11, der ein Rohr oder ein Rohr-Zubehörartikel ist.

**13.** Verwendung der Polypropylen-Zusammensetzung nach einem der vorstehenden Ansprüche 1 bis 7 zum Herstellen eines Artikels und vorzugsweise eines Rohrs oder eines Rohr-Zubehörartikels.

## Revendications

**1.** Composition de polypropylène ayant un $MFR_2$ (2,16 kg, 230 °C, ISO 1133) dans la plage allant de 0,1 à 0,9 g/10 min, et une teneur en matière insoluble à chaud dans le xylène (XHU) déterminée comme décrit dans la section expérimentale, dans la plage allant de 0,01 à 0,65 % en poids par rapport au poids total de la composition de polypropylène, ladite composition de polypropylène pouvant être obtenue ou étant obtenue selon un procédé comprenant les étapes suivantes :

a) la fourniture d'un copolymère de propylène (A) ayant un $MFR_2$ (2,16 kg, 230 °C, ISO 1133) dans la plage allant de 1 à 3 g/10 min et comprenant une teneur en un ou plusieurs comonomères alpha-oléfiniques en $C_2$ ou $C_4$ à $C_{12}$ dans la plage allant de 1 à 10 % en poids par rapport au poids total du copolymère de propylène (A), de préférence en outre la fusion du copolymère de propylène (A) dans une extrudeuse ;

b) le mélange dudit copolymère de propylène (A) en une quantité dans la plage allant de 67,0 à 99,5 % en poids avec un initiateur radicalaire (B) en une quantité dans la plage allant de 0,1 à 2,0 % en poids, chacun par rapport au poids total du mélange obtenu, l'initiateur radicalaire (B) étant choisi dans le groupe constitué par les composés peroxy selon les formules (I) à (III) suivantes,

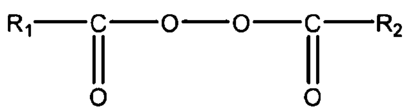
(I),

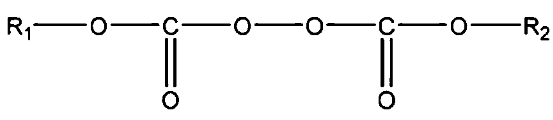
(II),

et

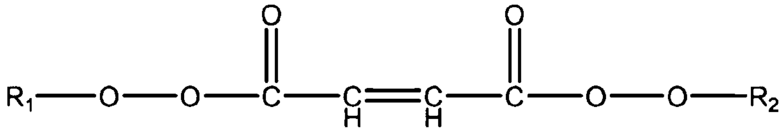
(III),

et tous mélanges de ceux-ci, où $R_1$ et $R_2$ sont choisis chacun indépendamment parmi les groupes alkyle ayant de 2 à 30 atomes de carbone, et qui peuvent être cycliques, linéaires, ramifiés ou non ramifiés, où $R_1$ et $R_2$ peuvent être identiques ou différents, de préférence le mélange à l'état fondu dudit copolymère de propylène (A) avec l'initiateur radicalaire (B) dans un dispositif de mélange à l'état fondu, tel qu'une extrudeuse,
c) la mise en réaction dudit copolymère de propylène (A) et de l'initiateur radicalaire (B) à une température dans la plage allant de 150 à 300 °C, afin d'obtenir la composition de polypropylène.

**2.** Composition de polypropylène selon la revendication 1, où le copolymère de propylène (A) est un copolymère de propylène statistique et/ou
les un ou plusieurs comonomère(s) alpha-oléfinique(s) du copolymère de propylène (A) sont choisis parmi les alpha-oléfines en $C_4$ à $C_{12}$, de préférence dans le groupe constitué du 1-butène, du 1-hexène et du 1-octène.

**3.** Composition de polypropylène selon la revendication 1 ou 2, où l'initiateur radicalaire (B) est choisi dans le groupe constitué par le peroxydicarbonate de di-(2-éthylhexyle), le peroxydicarbonate de di-(4-tert-butylcyclohexyle), le peroxydicarbonate de dicétyle, le peroxydicarbonate de dimyristyle et tous mélanges de ceux-ci, de préférence l'initiateur radicalaire (B) est un peroxydicarbonate de dialkyle de formule (II), plus préférablement l'initiateur radicalaire (B) est le peroxydicarbonate de dicétyle.

**4.** Composition de polypropylène selon l'une quelconque des revendications précédentes, où, à l'étape b), un polymère d'éthylène (C) est en outre mélangé avec le copolymère de propylène (A) et l'initiateur radicalaire (B) en une quantité dans la plage de 1 à 30 % en poids, par rapport au poids total d'un mélange résultant, et/ou
un additif (D) est en outre mélangé avec le copolymère de propylène (A) et l'initiateur radicalaire (B) en une quantité dans la plage allant de 0,05 à 1 % en poids, par rapport au poids total d'un mélange résultant, l'additif étant de préférence un antioxydant.

**5.** Composition de polypropylène selon la revendication 4, où le polymère d'éthylène (C) est un polymère d'éthylène préparé en présence d'un catalyseur à site unique, de préférence un catalyseur métallocène.

**6.** Composition de polypropylène selon la revendication 4 ou 5, où le polymère d'éthylène (C) a une densité (ISO 1183-1:2012) dans la plage allant de 900 à 960 kg/$m^3$ et un $MFR_2$ (2,16 kg, 190 °C, ISO 1133) dans la plage allant de 0,01 à 5,0 g/10 min, et/ou
où le polymère d'éthylène (C) est un copolymère ou terpolymère bimodal d'éthylène.

**7.** Composition de polypropylène selon l'une quelconque des revendications précédentes, où la composition de polypropylène présente une réduction de l'indice de fluidité à chaud (MFR) d'au moins 45 %, la réduction du MFR étant définie comme la valeur $MFR_2$ (2,16 kg, 230 °C, ISO 1133) en g/10 min de la composition de polypropylène, par rapport à la valeur $MFR_2$ (2,16 kg, 230 °C, ISO 1133) en g/10 min d'une composition de polypropylène comparative comprenant un copolymère de propylène ayant un $MFR_2$ (2,16 kg, 230 °C, ISO 1133) dans la plage allant de 1 à 3 g/10 min et comprenant une teneur en un ou plusieurs comonomères alpha-oléfiniques en $C_2$ ou $C_4$ à $C_{12}$ dans la plage allant de 1 à 10 % en poids par rapport au poids total du copolymère de propylène et préparée en l'absence d'un initiateur radicalaire (B), et/ou
où la composition de polypropylène présente un rapport entre la réduction de l'indice de fluidité à chaud (MFR) et la teneur insolubles à chaud dans le xylène (XHU) [réduction de MFR/XHU] d'au moins 150, la réduction de MFR étant exprimée en % comme défini ci-dessus et la teneur en XHU étant exprimée en % en poids, par rapport au poids total de la composition de polypropylène, déterminée comme décrit dans la description.

**8.** Procédé pour produire une composition de polypropylène, comprenant les étapes suivantes :

a) la fourniture d'un copolymère de propylène (A) ayant un $MFR_2$ (2,16 kg, 230 °C, ISO 1133) dans la plage allant de 1 à 3 g/10 min et comprenant une teneur en un ou plusieurs comonomères alpha-oléfiniques en $C_2$ ou $C_4$ à $C_{12}$ dans la plage allant de 1 à 10 % en poids par rapport au poids total du copolymère de propylène (A), de préférence en outre la fusion du copolymère de propylène (A) dans une extrudeuse ;
b) le mélange dudit copolymère de propylène (A) en une quantité dans la plage allant de 67,0 à 99,5 % en poids en présence d'un initiateur radicalaire (B) en une quantité dans la plage allant de 0,1 à 2,0 % en poids, chacun par rapport au poids total du mélange obtenu, l'initiateur radicalaire (B) étant choisi dans le groupe constitué par les composés peroxy selon les formules (I) à (III) suivantes :

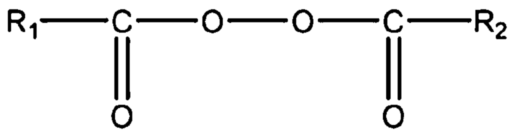

(I),

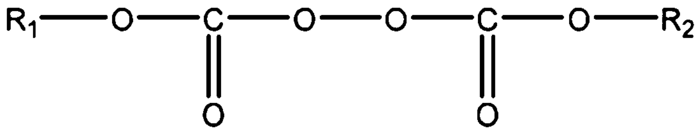

(II),

et

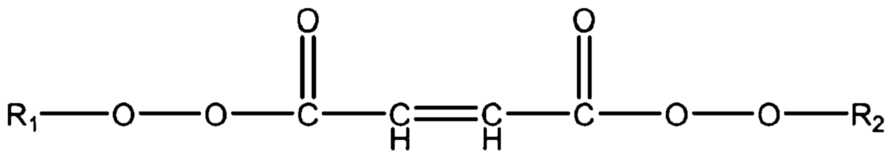

(III),

et tous mélanges de ceux-ci, où $R_1$ et $R_2$ sont choisis chacun indépendamment parmi les groupes alkyle ayant de 2 à 30 atomes de carbone, et qui peuvent être cycliques, linéaires, ramifiés ou non ramifiés, où $R_1$ et $R_2$ peuvent être identiques ou différents, de préférence le mélange à l'état fondu dudit copolymère de propylène (A) avec l'initiateur radicalaire (B) dans un dispositif de mélange à l'état fondu, tel qu'une extrudeuse ; et

c) la mise en réaction dudit copolymère de propylène (A) et de l'initiateur radicalaire (B) à une température dans la plage allant de 150 à 300 °C, afin d'obtenir la composition de polypropylène, ladite composition de polypropylène ayant un $MFR_2$ (2,16 kg, 230 °C, ISO 1133) dans la plage allant de 0,1 à 0,9 g/10 min, et une teneur en insolubles à chaud dans le xylène (XHU), déterminée comme décrit dans la section expérimentale, dans la plage allant de 0,01 à 0,65 % en poids par rapport au poids total de la composition de polypropylène.

**9.** Procédé selon la revendication 8, où, à l'étape c), le copolymère de propylène (A) et l'initiateur radicalaire (B) sont mélangés à l'état fondu dans un dispositif de mélange à l'état fondu, tel qu'une extrudeuse, de préférence à une température du cylindre dans la plage allant de 160 à 280 °C.

**10.** Procédé selon la revendication 8 ou 9, où l'étape c) est réalisée en présence d'un polymère d'éthylène (C).

**11.** Article comprenant la composition de polypropylène selon l'une quelconque des revendications 1 à 7 précédentes.

**12.** Article selon la revendication 11, qui est un tuyau ou un article de tuyau supplémentaire.

**13.** Utilisation d'une composition de polypropylène selon l'une quelconque des revendications 1 à 7 précédentes pour la fabrication d'un article, de préférence d'un tuyau ou d'un article de tuyau supplémentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2520425 A1
- WO 2021001176 A1
- US 11834529 B
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- EP 0887379 A1
- WO 9212182 A1
- WO 2004000899 A1
- WO 2004111095 A1
- WO 9924478 A1
- WO 9924479 A1
- WO 0068315 A1
- WO 03051934 A1
- EP 3257895 A1


### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **J. RANDALL**. Macromol. Sci.. *Rev. Macromol. Chem. Phys.*, 1989, vol. C29, 201